# EUROPÄISCHE PATENTSCHRIFT

(11) **EP 2 165 400 B1**
(45) Veröffentlichungstag und Bekanntmachung des Hinweises auf die Patenterteilung: **02.10.2013**
(21) Anmeldenummer: 08760433.6
(22) Anmeldetag: 03.06.2008
(51) Int. Cl.: H02G 11/02, B65H 75/48

(54) **FEDERLEITUNGSTROMMEL**
SPRING CABLE DRUM
TAMBOUR DE CABLE A RESSORT

(30) Priorität: 02.07.2007 DE 202007009253 U
(43) Veröffentlichungstag der Anmeldung: 24.03.2010
(73) Patentinhaber: Conductix-Wampfler GmbH, 79576 Weil am Rhein-Märkt (DE)
(72) Erfinder: SCHMIEDLE, Andreas, 79541 Loerrach (DE)
(74) Vertreter: Charrier, Rapp & Liebau
(86) Internationale Anmeldenummer: PCT/EP2008/056849
(87) Internationale Veröffentlichungsnummer: WO 2009/003778

(56) Entgegenhaltungen:
- EP-A- 0 802 601
- DE-A1- 2 110 408
- US-A- 3 353 792
- US-A- 4 009 843

## Beschreibung

Die Erfindung betrifft eine Federleitungstrommel nach dem Oberbegriff des Anspruchs 1.

Derartige Federleitungstrommeln werden bei Stromzuführunasanlagen benutzt, bei denen die stromführende Leitung unter einer ständigen Vorspannung gehalten werden soll. Hierzu wird die Leitung auf einen als Wickel dienenden Trommelmantel aufgespult. Seitlich des Trommelmantels befinden sich Trommelschilder, um ein seitliches Herabrutschen des Leitungswickels zu verhindern. Die Leitung kann über seitlich angeordnete Schleifringkörper mit elektrischem Strom und/oder Daten beaufschlagt werden. Aus der EP 0 802 601 B1 ist eine solche Federleitungstrommel bekannt, die den besonderen Vorteil hat, dass sie durch die Kapselung der Feder in einer Kassette eine hohe Betriebssicherheit bietet und außerdem einen Wechsel der Abzugsrichtung durch einfaches Umdrehen der Kassette ermöglicht.

Das Dokument DE2110408A1 zeigt, gemäß dem Oberbegriff des Anspruchs 1, in Fig. 1 und 3 eine Federleitungstrommel mit den zwei sich innerhalb der Trommel gegenüberliegenden Scheiben, einer Feder und einem Halteglied in Form eines Haltebolzens.

Das Dokument US4009843A zeigt in Fig. 1 - 3 eine Federleitungstrommel, mit einem Scherstift zur Entlastung der Feder bei drohender Überlastung. Die Anordnung der Feder zwischen den Scheiben ist jedoch außerhalb der Federleitungstrommel und daher im Grundsatz verschieden, da in dieser Anordnung die Feder und deren Halterung leichter zugänglich ist.

Ein Problem stellt bei derartigen Federleitungstrommeln die mögliche Überlastung der Feder über den spezifizierten Kraftbereich hinaus durch ungünstige Umstände bzw. unzulässige Betriebsabläufe dar. In einem solchen Überlastfall kann es zu einer irreversiblen Verformung oder sogar zu einem Abreißen der Feder kommen, wodurch Reparaturarbeiten, die den Austausch der Feder umfassen, notwendig werden und hohe Kosten, u.a. durch den Stillstand der Anlage, entstehen.

Es besteht daher die Aufgabe, eine Federleitungstrommel vor den Folgen einer Überlastung im Betrieb zu schützen.

Gelöst wird diese Aufgabe mit den Merkmalen des Anspruchs 1. Vorteilhafte Ausgestaltungen sind den Unteransprüchen zu entnehmen.

Die Erfindung geht davon aus, dass sich beim Betrieb einer Federleitungstrommel eine Überlastung nur mit unverhältnismäßig großem Aufwand völlig ausschließen ließe und sieht daher vor, die Feder dadurch gegen Beschädigung zu schützen, dass zumindest eines ihrer Enden an einem Halteglied mit mindestens einer Sollbruchstelle befestigt ist. Diese Sollbruchstelle des Haltegliedes ist so dimensioniert, dass sie bricht und dadurch eine Entspannung der Feder ermöglicht, bevor diese Schaden nehmen kann. Durch eine zweckmäßige Gestaltung des Haltegliedes, insbesondere als einfacher Bolzen mit Querschnittsverjüngungen als Sollbruchstellen, können die durch eine Überlastung verursachten Kosten im Vergleich zu einem Austausch der Feder erheblich reduziert werden.

Die erfindungsgemäße Lösung ist voll kompatibel mit dem Konzept einer Kapselung der Feder in einer Federkassette, indem der Bolzen mit Sollbruchstellen in der Federkassette montiert wird, so dass er im Betrieb die Kraftübertragung zwischen Feder und Kassette übernimmt.

Ein Ausführungsbeispiel einer erfindungsgemäßen Federleitungstrommel wird im folgenden unter Bezugnahme auf die begleitenden Zeichnungen näher beschrieben, welche zeigen:
- Fig. 1: einen seitlichen Schnitt durch eine Federleitungstrommel,
- Fig. 2: eine Explosionsdarstellung einer herkömmlichen Federkassette einer Federleitungstrommel und
- Fig. 3: eine Explosionsdarstellung einer erfindungsgemäßen Federkassette einer Federleitungstrommel mit zwei vergrößerten Details.

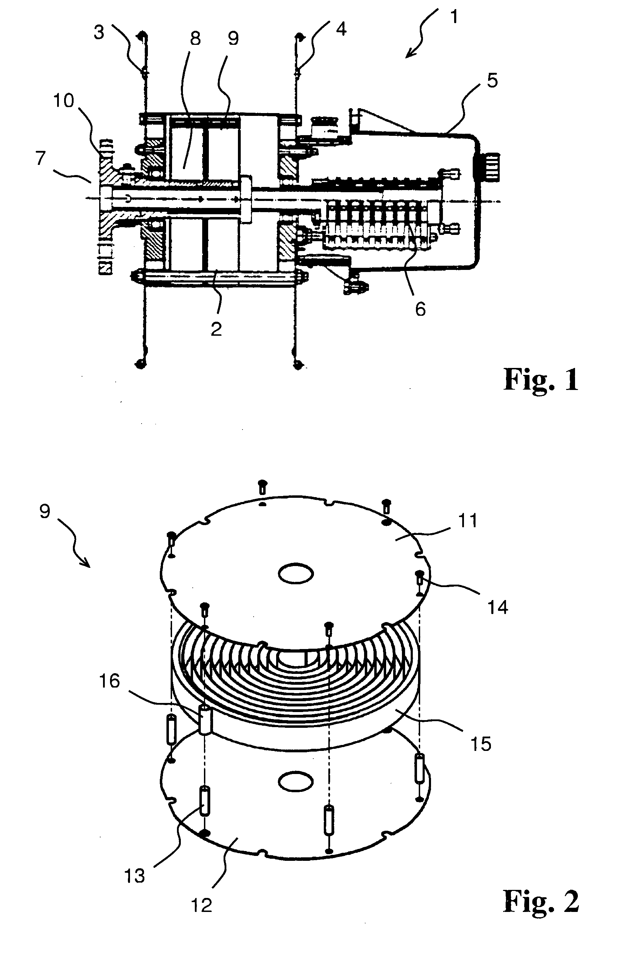

Aus Fig. 1 ist ersichtlich, dass eine Federleitungstrommel 1 im wesentlichen aus einem Trommelmantel 2, welcher als Wicklung für die (nicht dargestellte) Leitung dient, zwei seitlichen Trommelschildern 3, 4, einem Schleifringkörpergehäuse 5 mit Schleifringkörpern 6, einer gemeinsamen Achse 7 und einer über eine Federnuss 8 auf diese Achse 7 geschobenen Federkassette 9 sowie einem seitlichen Flansch 10 besteht. Bei einer Drehung des Trommelmantels 2 infolge des Abzugs der darauf aufgewickelten Leitung wird bzw. werden eine oder mehrere in der Federkassette 9 befindliche Spiralfeder(n) gespannt, wodurch die Leitung mit einer Zugspannung beaufschlagt wird.

Eine Explosionsdarstellung einer Federkassette 9 herkömmlicher Art zeigt Fig. 2. Die Federkassette 9 besteht im wesentlichen aus zwei einander gegenüberliegenden, im wesentlichen kreisförmigen Blechscheiben 11 und 12, die durch eine Reihe von entlang des jeweiligen Randes angeordneten Distanzbolzen 13 parallel zueinander in einem gewissen Abstand voneinander gehalten werden. Hierzu sind die Distanzbolzen 13 zumindest auf einer Seite durch Schrauben 14 mit einer Scheibe 11 verbunden. Die in Fig. 2 nicht gezeigte Verbindung der Distanzbolzen 13 mit der anderen Scheibe 12 kann ebenfalls durch Schrauben erfolgen, könnte aber auch eine nicht lösbare Verbindung sein, da zum Einlegen oder Entnehmen einer Feder 15 in den bzw. aus dem Raum zwischen den beiden Scheiben 11 und 12 nur eine davon entfernbar sein muss.

Das äußere Ende der als spiralförmiges Band ausgeführten Feder 15 ist beispielsweise zu einer Schlinge 16 geformt, die beim Einlegen der Feder 15 auf einen der bereits an der Scheibe 12 befestigten Distanzbolzen 13 gesteckt wird, bevor die zweite Scheibe 11 darüber gelegt und mit den Schrauben 14 an den Distanzbolzen 13 befestigt wird. Die Befestigung des äußeren Endes der Feder 15 an einem Distanzbolzen 13 kann aber auch anders als in Form einer Schlinge 16 gelöst sein. Das innere Ende der Feder 15 wird an der in Fig. 2 nicht gezeigten Federnuss 8 befestigt. Bei einer Drehung des Trommelmantels 2 folgt die Federkassette 9 und damit die Schlinge 16 am äußeren Ende der Feder 15 dieser Bewegung, während die Federnuss 8 und damit das innere Ende der Feder 15 stillsteht, wodurch die Feder 15 unter Zugspannung gelangt.

Wird die Feder 15 überlastet, also zu weit ausgelenkt, so kommt es zu einer irreversiblen Verformung derselben, und zwar meistens im Bereich des um den Distanzbolzen 13 geschlungenen Endes. Die Schlinge 16 wird dabei aufgebogen oder reißt sogar ab. Zur Reparatur muss in diesem Fall die Federleitungstrommel 1 zerlegt und die Feder 15 komplett ausgetauscht werden, was unter anderem wegen des damit verbundenen Stillstandes der gesamten Anlage bis zum Eintreffen der Ersatzfeder mit hohen Kosten verbunden ist.

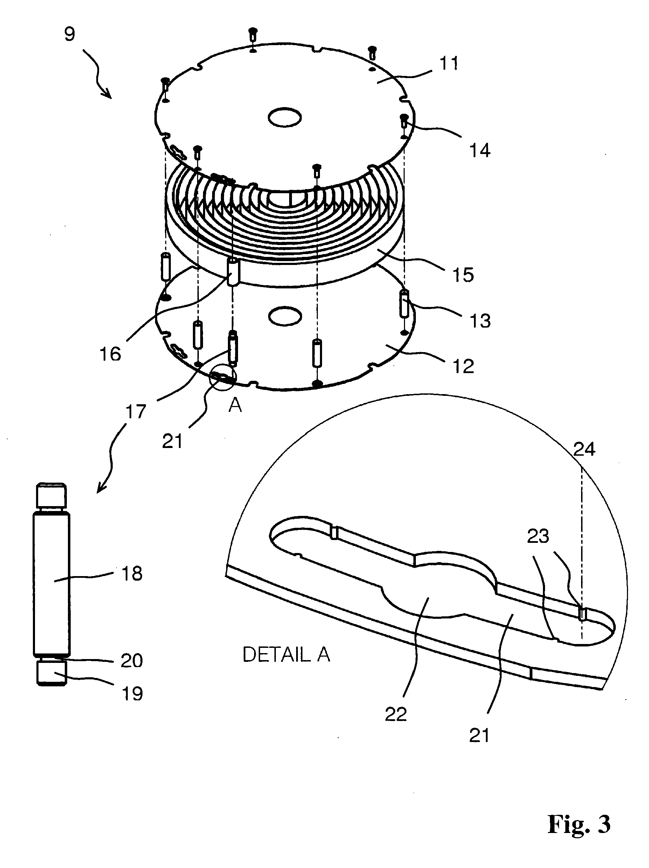

Um den Reparaturaufwand im Fall einer Überlastung zu verringern, sieht die Erfindung die in Fig. 3 dargestellte Abwandlung der Federkassette 9 aus Fig. 2 vor. Dabei bleibt der grundlegende Aufbau der Federkassette 9 aus den zwei Scheiben 11 und 12 und den Distanzbolzen 13 unverändert. Lediglich die Befestigung des äußeren Endes der Feder 15 ist anders gelöst. Die dortige Schlinge 16 umgibt anstelle eines Distanzbolzens 13 einen speziellen Haltebolzen 17, der in Fig. 3 links unten vergrößert dargestellt ist. Es versteht sich, dass der Befestigungsabschnitt am Ende der Feder 15 auch hier nicht unbedingt die Form einer Schlinge 16 haben muss.

Der Haltebolzen 17 weist einen Mittenabschnitt 18 mit einem ersten Durchmesser und einer geringfügig unter dem Abstand der Scheiben 11 und 12 liegenden Länge und an seinen beiden Enden jeweils einen Endabschnitt 19 mit einem zweiten, kleineren Durchmesser auf. Zwischen dem Mittenabschnitt 18 und jedem Endabschnitt 19 befindet sich jeweils eine als Sollbruchstelle wirksame Querschnittsverjüngung 20 mit einem dritten Durchmesser, der noch kleiner als der zweite Durchmesser ist. Der Haltebolzen 17 ist bezüglich einer Querschnittsebene, die ihn mittig schneidet, symmetrisch geformt.

Zur Fixierung des Haltebolzens 17 zwischen den Scheiben 11 und 12 befinden sich an den jeweiligen Rändern derselben einander paarweise gegenüberliegende Schlitze 21, von denen einer in Fig. 3 rechts unten als Detail A vergrößert dargestellt ist. Ein Schlitz 21 hat eine Breite, die annähernd dem Durchmesser eines Endabschnitts 19 des Haltebolzens 17 entspricht und etwas größer als dieser ist, so dass ein Endabschnitt 19 in dem Schlitz 21 mit Spiel entlanggeführt werden kann. In der Mitte des Schlitzes 21 ist eine kreisförmige Aufweitung 22 vorgesehen, deren Durchmesser etwas größer als der Durchmesser des Mittenabschnitts 18 des Haltebolzens 17 ist, so dass der Haltebolzen 17 insgesamt durch die Aufweitung 22 hindurchgeführt werden kann.

Die Befestigung des äußeren Endes der Feder 15 kann in diesem Fall dadurch erfolgen, dass nach dem Auflegen der Feder 15 auf eine Scheibe 12 und dem Auflegen und Festschrauben der zweiten Scheibe 11 die Schlinge 16 der dann zwischen den beiden Scheiben 11 und 12 befindlichen Feder 15 zum Fluchten mit den Aufweitungen 22 zweier einander gegenüberliegender Schlitze 21 in den Scheiben 11 bzw. 12 gebracht und dann der Haltebolzen 17 durch eine der beiden Aufweitungen 22 hindurch so weit in die Schlinge 16 eingeführt wird, bis sich der Mittenabschnitt 18 zwischen den beiden Scheiben 11 und 12 befindet und nur noch jeweils ein Endabschnitt 19 in jede der beiden Scheiben 11 und 12 ragt.

Dann wird der Haltebolzen 17 und zusammen mit ihm die Schlinge 16 der Feder 15 von den Aufweitungen 22 fort an ein Ende der Schlitze 21 geführt. Dies kann entweder mittels eines durch die Schlitze 21 hindurchgeführten Stabes oder durch eine Drehung der Feder 15 an ihrem inneren Ende geschehen. Sobald der Haltebolzen 17 den Bereich der Aufweitungen 22 verlassen hat, ist er durch die Scheiben 11 und 12 in axialer Richtung fixiert, da der Durchmesser seines Mittenabschnitts 18 größer ist als die Breite eines Schlitzes 21. An geeigneter Stelle ist jeder Schlitz 21 durch zwei einander gegenüberliegende Rastnasen 23 etwas verengt, und zwar so weit, dass die Endabschnitte 19 des Haltebolzens 17 durch Ausübung einer ausreichenden Kraft über diese Rastnasen 23 der Schlitze 21 hinweg in die Endbereiche der Schlitze 21 geschnappt werden können.

Die Rastnasen 23 halten den Haltebolzen 17 nach dem Einschnappen in den Endbereichen der Schlitze 21 in einer Position fixiert, die in der Ansicht des Details A in Fig. 3 durch eine gestrichelte Linie 24 markiert ist, welche für den dort gezeigten Schlitz 21 die Lage der Längsachse des Haltebolzens 17 in dessen eingeschnapptem Zustand angibt. Die Rastnasen 23 nehmen aber nicht die im Betrieb der Federleitungstrommel 1 als Folge der Federkraft auf die Scheiben 11 und 12 wirkende Reaktionskraft auf. Vielmehr ist die Federkraft dann so gerichtet, dass besagte Reaktionskraft von den halbkreisförmigen Enden der Schlitze 21 aufgenommen wird.

Alternativ kann insbesondere bei der Erstmontage die Schlinge 16 der Feder 15 bereits an der vorgesehenen Stelle 24 am Ende des Schlitzes 21 einer Scheibe 12 positioniert und dort der Haltebolzen 17 durch die Schlinge 16 der Feder 15 hindurch in diesen Schlitz 21 eingeführt werden. Danach kann die zweite Scheibe 11 so aufgesetzt werden, dass der Haltebolzen 17 auch in dieser bereits an der entsprechenden Stelle eines dortigen Schlitzes 21 zu liegen kommt.

Jeder Schlitz 21 erstreckt sich von der Aufweitung 22 aus symmetrisch in zwei zueinander entgegengesetzte Richtungen, die annähernd parallel zum Rand der jeweiligen Scheibe 11 bzw. 12 verlaufen. Dabei kann der Schlitz 21 insgesamt eine gerade Form, aber auch in Anpassung an eine runde Form der Scheiben 11 und 12, wie sie für das in den Figuren gezeigte Ausführungsbeispiel angenommen wurde, eine Kulissenform haben. Die Symmetrie des Schlitzes 21 sorgt dafür, dass die Bauform der Komponenten der Federkassette 9 unabhängig von der benötigten Abzugsrichtung der Federleitungstrommel 1 sein kann. Dies bedeutet, dass die Wirkungsrichtung der Federkraft erst beim Zusammenbau der Federkassette 9 durch die Orientierung, in der die Feder 15 zwischen die Scheiben 11 und 12 gelegt wird, festgelegt wird. Daher müssen für die beiden möglichen Wirkungsrichtungen der Federkraft keine verschiedenartigen Komponenten für die Federkassette 9 vorgesehen werden. Es versteht sich, dass der Haltebolzen 17 bei der Montage immer an denjenigen Enden eines Paares von Schlitzen 21 plaziert wird, welche von der Schlinge 16 aus gesehen in Richtung der von der Schlinge 16 abgehenden Feder 15 liegen.

Entlang des Randes jeder Scheibe 11 und 12 sind vorzugsweise, wie in Fig. 3 oben gezeigt ist, mehrere Schlitze 21 hintereinander vorhanden, damit der Befestigungspunkt des äußeren Endes der Feder 15 bei Bedarf variiert werden kann. Dies ermöglicht eine einfache Anpassung an verschiedene Federlängen.

Der Durchmesser der Querschnitts verjüngungen 20 des Haltebolzens 17 ist so dimensioniert, dass bei einer übermäßigen Zugbelastung der Feder 15 der Haltebolzen 17 an dieser Stelle bricht, bevor die Feder 15, insbesondere deren endseitige Schlinge 16, Schaden nehmen kann. Sobald es an einer der beiden Querschnittsverjüngungen 20 zum Bruch kommt, wird die Belastung der anderen so groß, dass diese ebenfalls bricht. Somit scheren beide Endabschnitte 19 des Haltebolzens 17 von seinem Mittenabschnitt 18 ab und geben dadurch die Schlinge 16 der Feder 15 frei. Die Feder 15 kann sich entspannen und bleibt insgesamt vor einer Beschädigung geschützt. Zur Reparatur der Federkassette 9 braucht nur der Haltebolzen 17 ersetzt zu werden, der ein einfaches und billiges Ersatzteil darstellt, welches problemlos bevorratet und vom Servicepersonal zu Reparaturarbeiten mitgebracht werden kann.

Darüber hinaus zeigt der Haltebolzen 17 durch einen Bruch zweifelsfrei eine unzulässige Überlastung im Betrieb an. Die Frage nach Materialermüdung oder Verarbeitungsmängeln der Feder 15 als mögliche andere, nicht von den Bedienern der Anlage zu verantwortende Ausfallursachen stellt sich somit von vornherein nicht.

## Patentansprüche

1. Federleitungstrommel, mit
einem als Leitungswickel dienendem, im wesentlichen zylindrischen Trommelmantel (2), mit zwei darin angeordneten, einander gegenüberliegenden Scheiben (11, 12) und einer zwischen den Scheiben (11 und 12) angeordneten, an zumindest einem ihrer beiden Enden an einem Halteglied befestigten Feder (15) zur Erzeugung einer Vorspannung auf der abgezogenen Leitung, wobei das Halteglied ein Haltebolzen (17) ist,
**dadurch gekennzeichnet, dass**
der Haltebolzen (17) mindestens eine Sollbruchstelle aufweist, welche so dimensioniert ist, dass sie bei einer vorbestimmten Belastung der Feder (15), die unterhalb des maximal zulässigen Wertes liegt, bricht und dadurch eine Entspannung der Feder (15) ermöglicht, und dass der Haltebolzen (17) zwischen den zwei einander gegenüberliegenden Scheiben (11, 12) aufgenommen ist, in denen hierzu zwei einander paarweise gegenüberliegende Schlitze (21) vorgesehen sind, die jeweils eine zum axialen Einführen des Haltebolzens (17) geeignete Aufweitung (22) und einen zur Fixierung des Haltebolzens (17) in Längsrichtung des Schlitzes (21) geeigneten Endbereich aufweisen, wobei der Endbereich jedes Schlitzes (21) durch zwei einander gegenüberliegende Rastnasen (23) definiert wird, über die der Haltebolzen (17) in dem Schlitz (21) durch Ausübung einer ausreichend großen Kraft in Längsrichtung des Schlitzes (21) hinweg in dessen Endbereich geschnappt werden kann.

2. Federleitungstrommel nach Anspruch 1, **dadurch gekennzeichnet, dass** die Feder in einer Federkassette (9) gekapselt ist, und dass der Haltebolzen (17) in der Federkassette (9) montiertist und an mindestens einer Stelle eine Querschnittsverjüngung (20) als Sollbruchstelle aufweist.

3. Federleitungstrommel nach Anspruch 2, **dadurch gekennzeichnet, dass** das Ende der Feder (15) um den Haltebolzen (17) geschlungen ist

4. Federleitungstrommel nach Anspruch 2 oder 3 , **dadurch gekennzeichnet, dass** die zwei Scheiben (11, 12) gleichartig sind und die Federkassette (9) die zwei Scheiben (11, 12) und eine Vielzahl von zwischen diesen entlang ihrer Ränder angeordneten und an diesen befestigten Distanzbolzen (13) aufweist, welche die Scheiben (11, 12) parallel zueinander in einem vorbestimmten Abstand voneinander halten und dadurch einen Raum zwischen den Scheiben (11, 12) für die Aufnahme der Feder (15) bereitstellen, und dass der Haltebolzen (17) zwischen den Scheiben (11, 12) in deren Randbereich angeordnet ist.

5. Federleitungstrommel nach einem der Ansprüche 1 bis 4, **dadurch gekennzeichnet, dass** jeder Schlitz (21) aus zwei sich symmetrisch von der Aufweitung (22) aus in entgegengesetzte Richtungen erstreckenden Abschnitten besteht.

6. Federleitungstrommel nach einem der Ansprüche 1 bis 5, **dadurch gekennzeichnet, dass** entlang des Randes der Scheiben (11, 12) mehrere Paare von einander jeweils gegenüberliegenden Schlitzen (21) vorgesehen sind.

7. Federleitungstrommel nach einem der Ansprüche 1 bis 6, **dadurch gekennzeichnet, dass** der Hahebolzen (17) einen Mittenabschnitt (18) mit einem ersten Durchmesser und zwei entgegengesetzte Endabschnitte (19) mit jeweils einem zweiten, kleineren Durchmesser aufweist, und dass sich zwischen dem Mittenabschnitt (18) und jedem Endabschnitt (19) jeweils eine als Sollbruchstelle wirksame Querschnittsverjüngung (20) mit einem dritten Durchmesser, der kleiner als der zweite Durchmesser ist, befindet.

## Claims

1. Spring cable drum, comprising a substantially cylindrical drum casing (2) which acts as a cable coil, comprising two mutually opposed discs (11, 12) arranged therein, and a spring (15) which is arranged between the discs (11 and 12) and attached at at least one of its two ends to a retaining member in order to generate prestress on the unwound cable, the retaining member being a retaining bolt (17), **characterised in that** the retaining bolt (17) has at least one predetermined breaking point, which is dimensioned such that it breaks at a predetermined load on the spring (15), which is below the maximum permissible value, and thereby allows the spring (15) to be relaxed, and **in that** the retaining bolt (17) is received between the two mutually opposed discs (11, 12) in which two slots (21) are additionally provided as a mutually opposed pair, which each have a widening (22) into which the retaining bolt (17) can be axially introduced and an end region for fixing the retaining bolt (17) in the longitudinal direction of the slot (21), the end region of each slot (21) being defined by two mutually opposed detents (23) by means of which the retaining bolt (17) can be snapped into the end region of the slot (21) by exerting a sufficiently large force in the longitudinal direction of the slot (21).

2. Spring cable drum according to claim 1, **characterised in that** the spring is enclosed in a spring cartridge (9), and **in that** the retaining bolt (17) is mounted in the spring cartridge (9) and has a cross-sectional tapering (20) as a predetermined breaking point at at least one point.

3. Spring cable drum according to claim 2, **characterised in that** the end of the spring (15) is looped around the retaining bolt (17).

4. Spring cable drum according to either claim 2 or claim 3, **characterised in that** the two discs (11, 12) are of the same type and the spring cartridge (9) comprises the two discs (11, 12) and a plurality of distance bolts (13) which are arranged between said discs along the edges thereof and are attached thereto, which bolts keep the discs (11, 12) mutually parallel at a predetermined mutual spacing and thereby provide a space between the discs (11, 12) for receiving the spring (15), and **in that** the retaining bolt (17) is arranged between the discs (11, 12) in the end region thereof.

5. Spring cable drum according to any of claims 1 to 4, **characterised in that** each slot (21) consists of two portions which extend symmetrically outwards from the widening (22) in opposite directions.

6. Spring cable drum according to any of claims 1 to 5, **characterised in that** a plurality of pairs of respectively mutually opposed slots (21) are provided along the edge of the discs (11, 12).

7. Spring cable drum according to any of claims 1 to 6, **characterised in that** the retaining bolt (17) comprises a central portion (18) having a first diameter and two opposite end portions (19) each having a second, smaller diameter, and **in that** in each case, a cross-sectional tapering (20) having a third diameter, which is smaller than the second diameter, and acting as a predetermined breaking point is located between the central portion (18) and each end portion (19).

## Revendications

1. Tambour de câble à ressort, comprenant
une enveloppe de tambour (2) essentiellement cylindrique faisant office d'enroulement de câble, deux disques (11, 12) disposés dans ladite enveloppe de tambour, se faisant face l'un l'autre et un ressort (15) disposé entre les disques (11 et 12), fixé par au moins une de ses deux extrémités au niveau d'un organe de retenue et servant à générer une précontrainte sur le câble retiré, sachant que l'organe de retenue est un boulon de retenue (17),
**caractérisé en ce que**
le boulon de retenue (17) présente au moins un point de rupture théorique, qui présente des dimensions telles qu'il se rompt en présence d'une contrainte prédéfinie du ressort (15), qui se trouve sous la valeur maximale autorisée, favorisant ce faisant une détente du ressort (15), et **en ce que** le boulon de retenue (17) est logé entre les deux disques (11, 12) se faisant face l'un l'autre, dans lesquels sont prévues à cet effet deux fentes (21) se faisant face par paire, lesquelles présentent respectivement un élargissement (22) approprié aux fins de l'introduction axiale du boulon de retenue (17) et une zone d'extrémité appropriée aux fins de la fixation du boulon de retenue (17) dans la direction longitudinale de la fente (21), sachant que la zone d'extrémité de chaque fente (21) est définie par deux ergots d'arrêt (23) se faisant face l'un l'autre, par l'intermédiaire desquels le boulon de retenue (17) peut être encliqueté dans la fente (21) par l'application d'une force suffisamment importante dans la direction longitudinale de la fente (21), dans la zone d'extrémité de cette dernière.

2. Tambour de câble à ressort selon la revendication 1, **caractérisé en ce que** le ressort est encapsulé dans une cassette de ressort (9), et **en ce que** le boulon de retenue (17) est monté dans la cassette de ressort (9) et présente, au niveau au moins d'un emplacement, un rétrécissement de section transversale (20) en tant que point de rupture théorique.

3. Tambour de câble à ressort selon la revendication 2, **caractérisé en ce que** l'extrémité du ressort (15) est enroulée autour du boulon de retenue (17).

4. Tambour de câble à ressort selon la revendication 2 ou 3, **caractérisé en ce que** les deux disques (11, 12) sont du même type, et **en ce que** la cassette de ressort (9) présente les deux disques (11, 12) et une pluralité de boulons d'écartement (13) disposés entre lesdits disques le long de leurs bords et fixés au niveau desdits bords, lesquels boulons d'écartement maintiennent les disques (11, 12) de manière parallèle l'un à l'autre à une certaine distance l'un de l'autre, mettant ce faisant à disposition un espace entre les disques (11, 12) pour le logement du ressort (15), et **en ce que** le boulon de retenue (17) est disposé entre les disques (11, 12) dans la zone de bord de ces derniers.

5. Tambour de câble à ressort selon l'une quelconque des revendications 1 à 4, **caractérisé en ce que** chaque fente (21) est constituée de deux sections s'étendant de manière symétrique en partant de l'élargissement (22) dans des directions opposées.

6. Tambour de câble à ressort selon l'une quelconque des revendications 1 à 5, **caractérisé en ce que** sont prévues, le long du bord des disques (11, 12), plusieurs paires de fentes (21) se faisant respectivement face les unes les autres.

7. Tambour de câble à ressort selon l'une quelconque des revendications 1 à 6, **caractérisé en ce que** le boulon de retenue (17) présente une section centrale (18) présentant un premier diamètre et deux sections d'extrémité (19) opposées présentant respectivement un deuxième diamètre de plus petite taille, et **en ce que** respectivement un rétrécissement de section transversale (20) agissant en tant que point de rupture théorique présentant un troisième diamètre, qui est inférieur au deuxième diamètre, se trouve entre la section centrale (18) et chaque section d'extrémité (19).
